# EUROPEAN PATENT APPLICATION

(11) **EP 2 492 024 A2**
(43) Date of publication of application: **29.08.2012**
(21) Application number: 12156740.8
(22) Date of filing: 23.02.2012
(51) Int. Cl.: B08B 7/02, B24C 7/00, B24C 9/00

(54) **Dry type cleaning case and dry type cleaning device**

(30) Priority: 25.02.2011 JP 2011040588; 13.10.2011 JP 2011226069
(71) Applicant: Ricoh Company, Ltd., Tokyo 143-8555 (JP)
(72) Inventor: Okamoto, Yoichi, Tokyo, 143-8555 (JP); Fuchigami, Akihiro, Tokyo, 143-8555 (JP); Tsukahara, Kohji, Japan, 143-8555 (JP); Murata, Shozo, Tokyo, 143-8555 (JP); Taneda, Yusuke, Tokyo, 143-8555 (JP)
(74) Representative: Forsythe, Dominic

(57) **Abstract**

A dry type cleaning case (4) cleans a cleaning object (20) by causing a cleaning medium (5) to fly by an airflow and contact the cleaning object.

The dry type cleaning case (4) includes an internal space in which the cleaning medium (5) is caused to fly; an opening (18) that comes in contact with the cleaning object (20) so that the cleaning medium (5) collides with the cleaning object (20); a ventilation path (24) through which air from outside is passed to the internal space; a suction opening (8) configured to generate a revolving airflow (30) in the internal space by suctioning the air that is guided into the internal space through the ventilation path; a porous unit (14) configured to pass removed matter that is removed from the cleaning object (20) to a side of the suction opening; and a humidifying unit (50) configured to increase humidity in an area where the cleaning medium (5) flies.

## Description

### BACKGROUND OF THE INVENTION

### 1. Field of the Invention

The present invention relates to a dry type cleaning device for cleaning a cleaning object by causing a flying cleaning medium to contact (collide with) the cleaning object, and more particularly to a dry type cleaning device that can clean a cleaning object by being applied to arbitrary portions of the cleaning object and that is particularly preferable as a handy type device, and a dry type cleaning case used in the dry type cleaning device.

### 2. Description of the Related Art

In recent years, in a soldering process using a flow soldering tank for manufacturing a printed-circuit board, a jig for masking areas other than the areas to undergo a soldering process is frequently used. When this kind of mask jig (referred to as a dip palette or a carrier palette) is repetitively used, flux is accumulated and fixed on the surface, which deteriorates the precision of the mask. Therefore, the mask jig needs to be periodically cleaned.

Typically, the mask jig is cleaned by being dipped in a solvent, and therefore a large amount of solvent is consumed. Thus, the cost inevitably increases, and a significant amount of load is inflicted on the worker.

There is known a method of spraying the solvent onto the cleaning object in a device instead of dipping the cleaning object in a solvent. However, this method also uses a large amount of solvent.

As a technology for solving this problem, there is known a dry type cleaning device that cleans a cleaning object by causing a flying cleaning medium to contact the cleaning object.

Patent documents 1 and 2 disclose the following cleaning method. Specifically, an opening is provided on the side surface of a cylindrical container, and the cleaning medium is caused to fly in a circumferential direction in the container by a revolving airflow formed by a compressed air current, to cause the cleaning medium to collide with the cleaning object that is in contact with the opening.

However, in this method, the revolving airflow is formed by a compressed air current, and therefore when the cleaning object is separated from the opening, the cleaning medium leaks outside the container.

To solve this problem, in patent document 1, a net member is provided at the opening to prevent the cleaning medium from leaking outside. However, with this configuration, new problems arise such as a decrease in the energy by which the cleaning medium collides with the cleaning object, and a decrease in the cleaning capability as the cleaning medium gets caught in the net member.

Patent document 2 discloses a method of providing an opening/closing lid for blocking the opening to prevent the cleaning medium from leaking outside. However, when the cleaning object is separated from the lid, the worker needs to quickly move the opening/closing lid for blocking the opening. Accordingly, the worker needs to pay more attention and the workload on the worker increases. Furthermore, the mechanism is complex and difficult to operate, and is susceptible to breakdown.

In view of the above, the applicant of the present application proposed the following dry type cleaning device. Specifically, a cleaning medium in the form of thin flakes is caused to fly inside a case by a revolving airflow generated by an air current that flows inside the case from outside via a ventilation path, in a state where a suction unit is connected to the case and the opening is blocked by the cleaning object. Furthermore, a mesh type porous unit is provided inside the case, which allows gas and dust to pass through but does not allow the cleaning medium to pass through. Accordingly, the cleaning medium stops by at the revolving airflow forming area so that the cleaning medium is caused to continuously fly and circulate by the revolving airflow (Japanese Patent Application No. 2010-175687).

According to this dry type cleaning device, even if the cleaning object is separated from the opening, the pressure in the ventilation path becomes the same as the atmospheric pressure, and therefore the revolving airflow vanishes. Furthermore, a large amount of outer air enters the case through the opening due to negative pressure caused by suction, and therefore the cleaning medium inside the case is suctioned to the porous unit and stays inside the case, so that the cleaning medium does not leak outside from the opening.

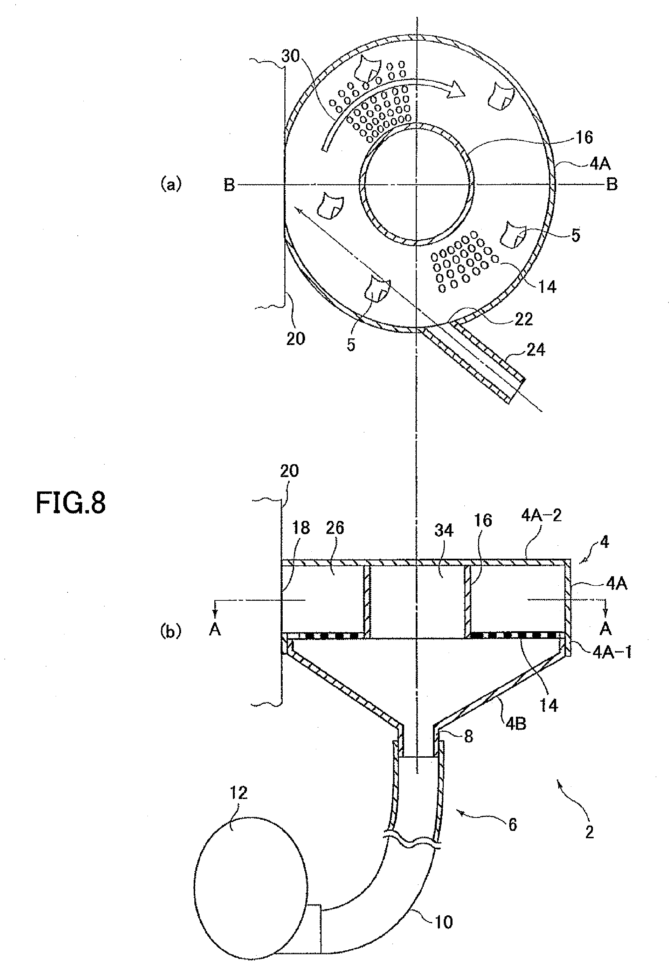

The prior application described above filed by the applicant of the present application cleans a cleaning object by the following configuration. As shown in FIG. 8, a suction unit 6 suctions the inside of a case 4, an opening 18 of the case 4 is blocked by a cleaning object 20, and the pressure inside the case 4 is turned into negative pressure so that outer air flows into the case 4 through an inlet 24 at high speed and a revolving airflow 30 is generated. Accordingly, the cleaning medium 5 is caused to fly and collide with the cleaning surface of the cleaning object 20 at the opening 18. The cross-sectional area of the flow path of the revolving airflow 30 is restricted by a flow path restriction member 16.

Before the opening 18 is blocked, the cleaning medium 5 is suctioned to a separating plate 14 acting as a porous unit by a suction function, and is held inside the case 4.

According to this configuration, the worker can move the case by holding it in his hand, and a desired location on the cleaning object 20 can be locally cleaned. Therefore, the cleaning can be performed with a high degree of freedom.

However, because this device is a handy type having mobility, in the dry type cleaning case in this type of dry type cleaning device, the cleaning medium is caused to fly in a limited, narrow space, by the high-speed revolving airflow.

Thus, multiple types of friction/collision are caused. For example, the cleaning medium collides with the cleaning object, multiple pieces of the cleaning medium collide with each other, and the cleaning medium contacts the inner walls of the case. Therefore, in this cleaning mechanism, the cleaning medium tends to be electrically charged. Particularly, in an environment with low humidity such as in winter, the following problems have been caused.

Specifically, when the electrical charge level (charge potential) of the cleaning medium increases, the cleaning medium adheres, by static electricity, to the porous unit (separating plate) which is for holding the cleaning medium inside the case against the suction function. Consequently, the suction function becomes blocked and the negative pressure inside the case decreases, which decreases the speed of the revolving airflow. In this state, the flying speed of the cleaning medium decreases, and the cleaning capability deteriorates rapidly.

The charged cleaning medium does not only adhere to the separating plate, but also to the inner walls of the case. The cleaning medium adhering by static electricity does not fly, even if the negative pressure is normally maintained and a strong revolving airflow is formed. Thus, the amount of the flying cleaning medium appropriate for removing dirt (dust) from the cleaning object becomes insufficient. In this case also, the cleaning capability deteriorates.
Patent Document 1: Japanese Laid-Open Patent Publication No. H4-83567
Patent Document 2: Japanese Laid-Open Patent Publication No. S60-188123
Patent Document 3: Japanese Laid-Open Patent Publication No. 2010-279947

### SUMMARY OF THE INVENTION

The present invention provides a dry type cleaning case and a dry type cleaning device, in which one or more of the above-described disadvantages are eliminated.

A preferred embodiment of the present invention provides a dry type cleaning case and a dry type cleaning device, which are capable of solving problems caused by friction charge (being charged due to friction), which typically occurs in a dry type cleaning device having the above-described narrow flying space.

According to an aspect of the present invention, there is provided a dry type cleaning case for cleaning a cleaning object by causing a cleaning medium to fly by an airflow and contact the cleaning object, the dry type cleaning case including an internal space in which the cleaning medium is caused to fly; an opening that comes in contact with the cleaning object so that the cleaning medium collides with the cleaning object; a ventilation path through which air from outside is passed to the internal space; a suction opening configured to generate a revolving airflow in the internal space by suctioning the air that is guided into the internal space through the ventilation path; a porous unit configured to pass removed matter that is removed from the cleaning object to a side of the suction opening; and a humidifying unit configured to increase humidity in an area where the cleaning medium flies.

### BRIEF DESCRIPTION OF THE DRAWINGS

Other objects, features and advantages of the present invention will become more apparent from the following detailed description when read in conjunction with the accompanying drawings, in which:
FIG. 1 is a schematic side view illustrating a usage state of a dry type cleaning case according to a first embodiment of the present invention;
FIG. 2 is a horizontal sectional view and a vertical sectional view of relevant parts of a dry type cleaning device including the dry type cleaning case shown in FIG. 1;
FIG. 3 is a horizontal sectional view and a vertical sectional view of relevant parts of a modification of a position of a cleaning medium discharge outlet;
FIG. 4 is an enlarged sectional view of relevant parts indicating an airtight state of an opening when the dry type cleaning device is used;
FIG. 5 is a schematic side view illustrating a usage state of a dry type cleaning case according to a second embodiment of the present invention;
FIG. 6 is a schematic side view illustrating a usage state of a dry type cleaning case according to a third embodiment of the present invention;
FIG. 7 is a schematic side view illustrating a usage state of a dry type cleaning case according to a fourth embodiment of the present invention;
FIG. 8 indicates schematic sectional views of the basic configuration of the dry type cleaning device according to an embodiment of the present invention;
FIGS. 9A and 9B illustrate a cleaning operation of the dry type cleaning device; and
FIG. 10 illustrates a usage state of the dry type cleaning device.

### DETAILED DESCRIPTION OF THE PREFERRED EMBODIMENTS

Definitions of terms in the present application are described below.

A case in an embodiment of the present invention is a container with a space that is shaped such that a revolving airflow can be easily generated inside. A shape by which a revolving airflow can be easily generated has continuous inner walls along which an airflow can flow and circulate. More preferably, the inner walls or internal space are shaped as a revolving body.

A ventilation path is a means for facilitating the airflow to flow in a fixed direction, and is typically a tube having a smooth inner surface. However, the ventilation path may be a plate having a smooth surface for controlling the flow path, because such a plate can also facilitate the fluid to flow in a direction along its surface and implement a rectifying effect.

Furthermore, the ventilation path is typically shaped so that the airflow flows linearly. However, a rectifying effect can still be achieved even if the ventilation path has a gradual curve that does not generate much of a flow path resistance. Unless particularly described, the direction of the ventilation path means the direction in which the airflow is blown out from the airflow entrance.

In an embodiment of the present invention, the ventilation path that is shaped as a linear tube, having one end being connected to the airflow entrance on the inner wall of the case, and another end being an air intake opening that is open to the atmosphere outside the case, is referred to as an "inlet". The inlet typically has low fluid resistance, has a smooth inner surface, and has a cross-sectional shape that is a circle, a rectangle, a slit, etc.

In an embodiment of the present invention, a revolving airflow is accelerated by an airflow flowing in from the airflow entrance, the accelerated revolving airflow flows along the inner walls of the case by changing its direction, circulates back to the position of the airflow entrance, and merges with the airflow flowing in. The fluid constituting the revolving airflow is not limited to air. Typically, the revolving airflow is generated in a closed space with continuous inner walls, by an airflow flowing in a direction of the tangent line of the inner walls.

A description is given, with reference to the accompanying drawings, of embodiments of the present invention.

With reference to FIGS. 8 through 10, a description is given of the basic configuration and functions of a dry type cleaning device according to an embodiment of the present invention.

A description is given of an outline of a handy type dry type cleaning device 2 according to an embodiment of the present invention, with reference to FIG. 8. FIG. 8 (a) is a horizontal cross-sectional view cut along a line A-A in FIG. 8 (b), and FIG. 8 (b) is a vertical cross-sectional view cut along a line B-B in FIG. 8 (a).

Inside the dry type cleaning device 2, there is provided a dry type cleaning case 4 (hereinafter, simply referred to as a case) having a flying space for a cleaning medium 5, and a suction unit 6 for turning the pressure inside the case 4 into a negative pressure.

The case 4 includes upper case 4A having a cylindrical shape that is the case main unit, and a lower case 4B having an inverted cone shape, which are integrally combined with each other. The cases are named upper and lower as a matter of convenience for describing them in the figure. The upper and lower directions may not necessarily correspond to the upper and lower sides of the actual device.

The lower case 4B has a suction opening 8 formed at the apex of the cone, which functions as a suction duct.

The suction unit 6 includes a flexible suction hose 10 having one end connected to the suction opening 8 and a suction device 12 connected to the other end of the suction hose 10. As the suction device 12, a home vacuum cleaner, a vacuum motor, a vacuum pump, or a device for indirectly generating low pressure or negative pressure by sending a fluid by pressure, may be used as deemed fit. In the following description, the vertical positional relationships such as the top surface and a bottom surface of a member are merely used as references in the figures.

The bottom surface of the upper case 4A is a fit recess part 4A-1 that is joined with the top edge of the lower case 4B, and the upper case 4A and the lower case 4B are separable. A top surface 4A-2 of the upper case 4A is sealed.

At the boundary between the bottom surface of the upper case 4A and the lower case 4B, a porous separating plate 14 is provided as a porous unit. The separating plate 14 is a plate member with holes like punching metal. The separating plate 14 is for stopping the cleaning medium 5 from moving to the lower case 4B when the cleaning medium 5 is suctioned. In FIG. 8 (a), part of the separating plate 14 is not shown. Furthermore, the size of each cleaning medium 5 is exaggerated as a matter of description.

The porous unit may be any porous unit as long as it has multiple pores through which air and dust (matter removed from cleaning object) can pass but the cleaning medium 5 cannot pass, such as a slit plate or a net. The porous unit may be made of any material such as resin and metal as long as it has a smooth surface.

The porous unit is disposed in a plane perpendicular to the center axis of the revolving airflow. By being perpendicular to the center axis of the revolving airflow, the airflow flows in a direction extending along the porous unit, so that the cleaning medium 5 is prevented from accumulating on the porous unit.

In order to prevent the revolving airflow from attenuating, the inside of the case 4 is preferably smooth, without any unevenness or protrusions and recessions.

By disposing the porous unit in a plane extending along the revolving airflow, the cleaning medium 5 suctioned onto the surface of the porous unit can be caused to fly again.

The material of the case 4 is not particularly limited. In order to prevent foreign matter from adhering to the case 4 and preventing attrition due to friction between the case 4 and the cleaning medium 5, for example, a metal material such as aluminum and stainless steel is preferable, but a resin material may be used.

At the center of the inside of the upper case 4A, there is provided a shaft that corresponds to the cylindrical axis of the upper case 4A. Specifically, a cylindrical flow path restricting member 16 is provided as part of the case. The bottom end of the flow path restricting member 16 is fixed to the separating plate 14.

The flow path restricting member 16 is provided for the purpose of increasing the flow speed by restricting the flow path cross-sectional area of the revolving airflow. According to the flow path restricting member 16, a ring type revolving airflow moving space (cleaning medium flying space) having smooth walls is formed inside the upper case 4A.

Depending on the shape of the upper case 4A, the central axis of the flow path restricting member 16 does not necessarily need to correspond to the central axis of the upper case 4A. As long as a ring-shaped space is formed, the axis may be eccentric.

On part of the side surface of the upper case 4A, an opening 18 is formed for causing the cleaning medium 5 flying by the revolving airflow to contact or collide with the cleaning object.

The upper case 4A is a cylinder whose height is significantly low with respect to the diameter. The opening 18 is formed on a side surface corresponding to the height. Accordingly, as shown in FIG. 8 (b), the entire case 4 is laid out such that the outer peripheral part of the upper case 4A other than the opening 18 is located away from a cleaning object 20. Thus, the degree of freedom is increased in terms of cleaning the cleaning object 20 by local contact, i.e., pin-point cleaning.

The opening 18 is formed by cutting the side surface of the upper case 4A by a cross-sectional plane parallel to the cylindrical axis.

On the side surface of the upper case 4A, an airflow entrance 22 is formed. The airflow entrance 22 has an inlet 24, acting as a revolving airflow generating unit and a ventilation path, that is connected from outside the upper case 4A and integrally fixed to the upper case 4A.

The inlet 24 is set to be substantially parallel to the separating plate 14. The ventilation direction of the inlet 24 is tilted with respect to the radius direction of the upper case 4A. The inlet 24 is positioned such that a line extending from the center of the inlet 24 reaches the opening 18.

The inlet 24 has a width extending in the height direction of the upper case 4A. A single inlet 24 having a smaller diameter or width than the height of the upper case 4A may be provided, or plural inlets may be provided to be aligned in the height direction of the upper case 4A.

As shown in FIG. 8, when the opening 18 is blocked by being in contact with the cleaning object 20, the inside of the case 4 becomes a closed space. Thus, outer air flows into the case 4 from the inlet 24 at high speed. This high speed airflow accelerates the cleaning medium 5 toward the opening 18, and generates a revolving airflow 30.

The revolving airflow 30, which is generated when the closed space is formed, blows the cleaning medium 5 suctioned onto the separating plate 14 to cause the cleaning medium 5 to fly again.

The opening 18 has a sufficient area such that when the opening 18 is open, the internal pressure at the airflow entrance 22 becomes the same as or close to the atmospheric pressure. Furthermore, the airflow entrance 22 is positioned such that the internal pressure becomes the same as or close to the atmospheric pressure.

By the above configuration, when the dry type cleaning device 2 is not applied to the cleaning object, the pressure at the airflow entrance 22 approaches atmospheric pressure. Therefore, the difference between the pressure at the airflow entrance 22 and the outside pressure becomes small. Consequently, the amount of airflow flowing into the case 4 decreases significantly. Meanwhile, the airflow flowing in from the opening 18 increases, and therefore the cleaning medium 5 is prevented form leaking out of the case 4.

When the opening 18 is open, the total amount of airflow flowing in is two to three times as that when the opening 18 is closed, and the cleaning medium 5 (particularly thin flakes) is suctioned onto the porous unit. Therefore, the cleaning medium 5 is prevented from flying again and leaking outside the case 4. This is referred to as a cleaning medium suction effect when the opening 18 is open.

The cleaning medium 5 is an assembly of thin flakes. However, the cleaning medium 5 also refers to a single flake.

A flake type cleaning medium has an area of greater than or equal to 1 mm² and less than or equal to 200 mm². The cleaning medium is a film made of a durable material such as polycarbonate, polyethylene terephthalate, acryl, and cellulose resin, having a thickness of greater than or equal to 0.02 mm² and less than or equal to 1.0 mm².

However, depending on the cleaning object, the thickness, size and material of the cleaning medium may be varied. A cleaning medium having a different size is also included in an embodiment of the present invention, and therefore the conditions of the cleaning medium are not limited to the above.

The material of the cleaning medium is not limited to resin. The cleaning medium may be a thin flake made of paper or cloth. Alternatively, the cleaning medium may be made of a mineral such as mica, ceramics, glass, and metal foil, as long as the material is made into a thin, light shape that can easily fly.

The ring-shaped internal space 26 of the upper case 4A has a function of causing the cleaning medium 5 to fly by the revolving airflow 30 and contacting the cleaning object 20 facing the opening 18.

An internal space 34 in the flow path restricting member 16 is a space that is unaffected by the revolving airflow.

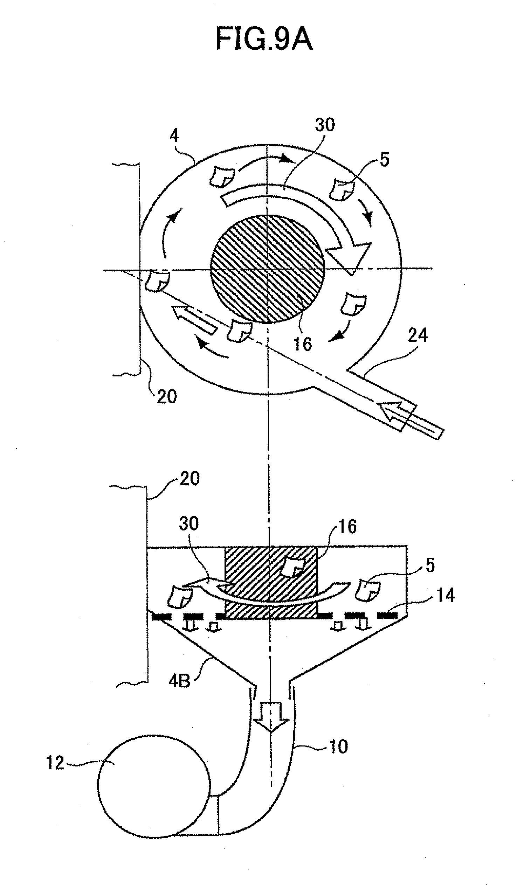

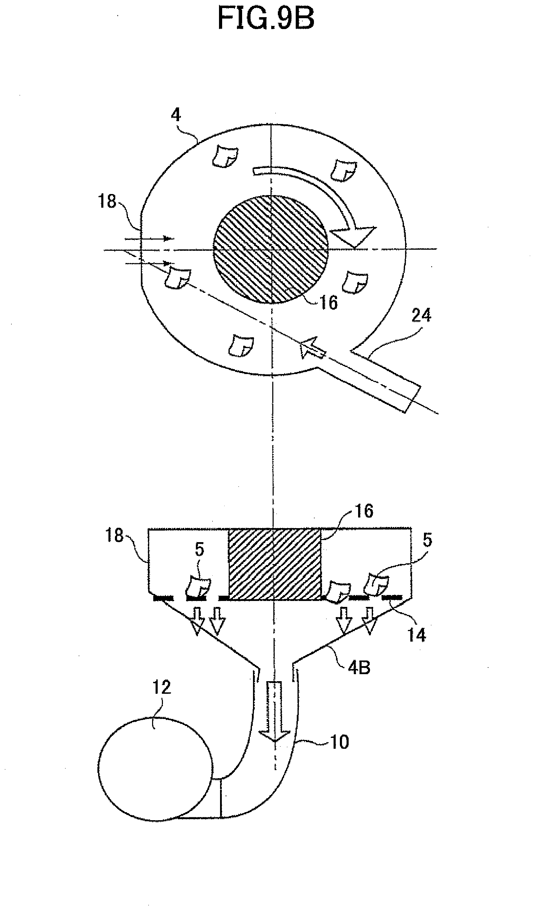

The cleaning operation performed by the dry type cleaning device 2 is described with reference to FIGS. 9A and 9B. In FIGS. 9A and 9B, the thicknesses of the members are not illustrated, and the internal space 34 which is a still space is illustrated by hatching as a matter of description.

FIG. 9B illustrates a state where the opening 18 is separated from the cleaning object 20, the opening 18 is open, and suction is being performed. FIG. 9A illustrates a state where the opening 18 is applied to the cleaning object 20 and the opening 18 is closed.

Before the cleaning operation, the cleaning medium 5 is supplied inside the case 4. As shown in the bottom diagram of FIG. 9B, the cleaning medium 5 supplied inside the case 4 is suctioned to the separating plate 14 and held inside the case 4.

The inside of the case 4 is in a negative pressure state due to suction, and therefore the air outside the case 4 flows into the case 4 through the inlet 24. At this time, the flow speed and the flow rate of the flow inside the inlet 24 are low, and therefore the revolving airflow 30 generated inside the case 4 is not strong enough to cause the cleaning medium 5 to fly.

When the cleaning medium 5 is supplied/held inside the case 4, as shown in FIG. 9A, the opening 18 is applied to the location that is to be cleaned on the surface of the cleaning object 20, and the opening 18 is closed.

When the opening 18 is closed, the suction from the opening 18 stops, and therefore the negative pressure inside the case 4 rapidly increases, the amount and speed of the air suctioned through the inlet 24 increase, the air is rectified in the inlet 24, and a high speed airflow blows into the case 4 from the outlet (airflow entrance 22) of the inlet 24.

The airflow blown out of the inlet 24 causes the cleaning medium 5 held on the separating plate 14 to fly toward the surface of the cleaning object 20 facing the opening 18.

The airflow becomes the revolving airflow 30, and flows in a ring shape along the inner walls of the case 4, and part of the revolving airflow 30 passes through the holes of the separating plate 14 and is suctioned by the suction unit 6.

When the revolving airflow 30 that has flown inside the case 4 in a ring shape returns to the outlet of the inlet 24, the airflow entering from the inlet 24 merges with the revolving airflow 30 so that the revolving airflow 30 is accelerated. In this manner, the revolving airflow 30 is stably formed inside the case 4.

The cleaning medium 5 revolves inside the case 4 by the revolving airflow 30, and repeatedly collides with the surface of the cleaning object 20. Due to the impact caused by the collision, the dirt separates from the surface of the cleaning object 20 as microscopic grains or powder.

The separated dirt passes through the holes of the separating plate 14, and is discharged outside the case 4 by the suction unit 6.

The revolution axis of the revolving airflow 30 formed inside the case 4 is perpendicular to the surface of the separating plate 14, and the revolving airflow 30 becomes parallel to the surface of the separating plate 14.

Thus, the revolving airflow 30 blows against the cleaning medium 5 suctioned to the surface of the separating plate 14 from a horizontal direction, enters between the cleaning medium 5 and the separating plate 14, peels off the cleaning medium 5, which is suctioned to the separating plate 14, from the separating plate 14, and causes the cleaning medium 5 to fly again.

Furthermore, when the opening 18 is closed, the negative pressure inside the upper case 4A increases, and the pressure inside the lower case 4B approaches negative pressure. Thus, the force suctioning the cleaning medium 5 onto the surface of the separating plate 14 decreases, so that the cleaning medium 5 can easily fly.

As the revolving airflow 30 is accelerated in a fixed direction, the revolving airflow 30 tends to be high speed, which facilitates the cleaning medium 5 to fly at high speed. The cleaning medium 5 revolving at high speed is unlikely to be suctioned to the separating plate 14, and therefore the dirt adhering to the cleaning medium 5 is easily separated from the cleaning medium 5 due to a centrifugal force.

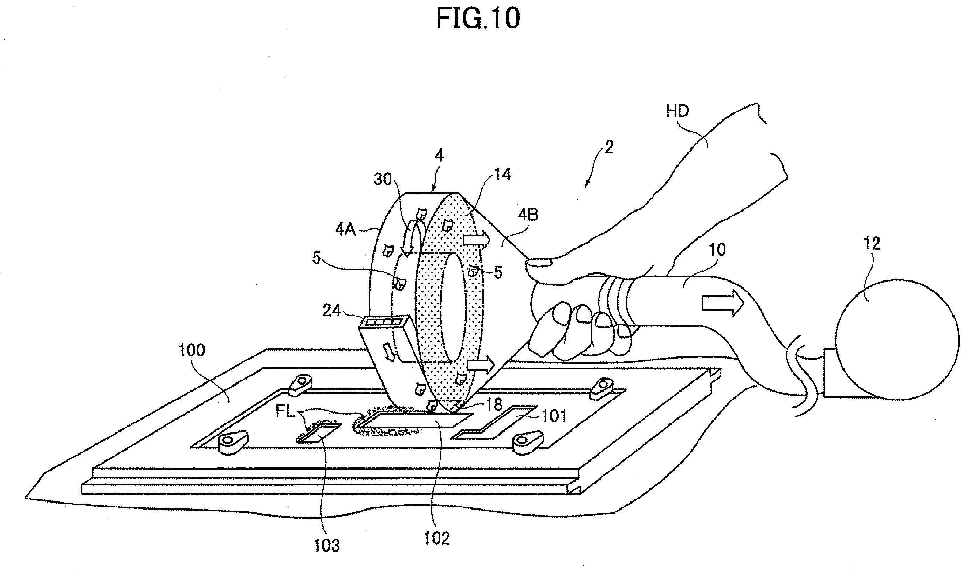

FIG. 10 illustrates an example where cleaning is actually being performed by the dry type cleaning device 2.

The cleaning object is a dip palette used in a flow soldering tank procedure described above, and is denoted by a reference numeral 100.

The dip palette 100 has mask openings 101, 102, and 103. Flux FL is accumulated and solidified around the holes of the mask openings 101, 102, and 103. The accumulated and solidified flux FL is the dirt that is to be removed.

As shown in FIG. 10, the base part (the part of the suction opening 8) of the lower case 4B is held by a hand HD, and the opening 18 of the case 4 is pushed against the part to be cleaned, while the case 4 is in a suction state.

Before the opening 18 is pushed against the part to be cleaned, the inside of the case 4 is in a suction state so that the cleaning medium 5 is suctioned against the separating plate 14. Therefore, even if the opening 18 faces downward, the cleaning medium 5 does not leak outside the case 4.

After the opening 18 is pushed against the part to be cleaned, the case 4 becomes airtight and therefore the cleaning medium 5 does not leak outside the case 4.

When the opening 18 is pushed against the part to be cleaned, the airflow from the inlet 24 rapidly increases, a strong revolving airflow 30 is generated in the case 4, the cleaning medium 5 suctioned to the separating plate 14 is caused to fly, and the cleaning medium 5 collides with the flux FL that is adhering to/solidified at the part to be cleaned of the dip palette 100 so that the flux FL is removed.

The cleaning worker holds the base part of the lower case 4B with his hand HD, and moves the opening 18 along the dip palette 100 to sequentially move to the respective parts to be cleaned, for removing all of the adhering/solidified flux FL.

In the state illustrated in FIG. 10, the parts around the mask opening 101 have been cleaned, but the parts around the mask openings 102 and 103 are not yet cleaned.

Even if the opening 18 is separated from a part to be cleaned when moving the opening 18 to the next part to be cleaned, according to the above-described cleaning medium suction effect, the cleaning medium 5 does not leak outside the case 4. Therefore, the amount of the cleaning medium 5 is maintained, so that the cleaning capability does not decrease due to a reduction in the amount of the cleaning medium 5.

After being repeatedly used, the cleaning medium 5 gradually breaks due to the impact when colliding with the part to be cleaned. Thus, the cleaning medium 5 is suctioned/collected by the suction device 12 together with the flux (dirt) removed from the cleaned parts of the dip palette 100. Accordingly, after using the dry type cleaning device 2 for a long period of time, the amount of the cleaning medium 5 held in the case 4 decreases.

In this case, the case 4 is replenished with a new cleaning medium 5.

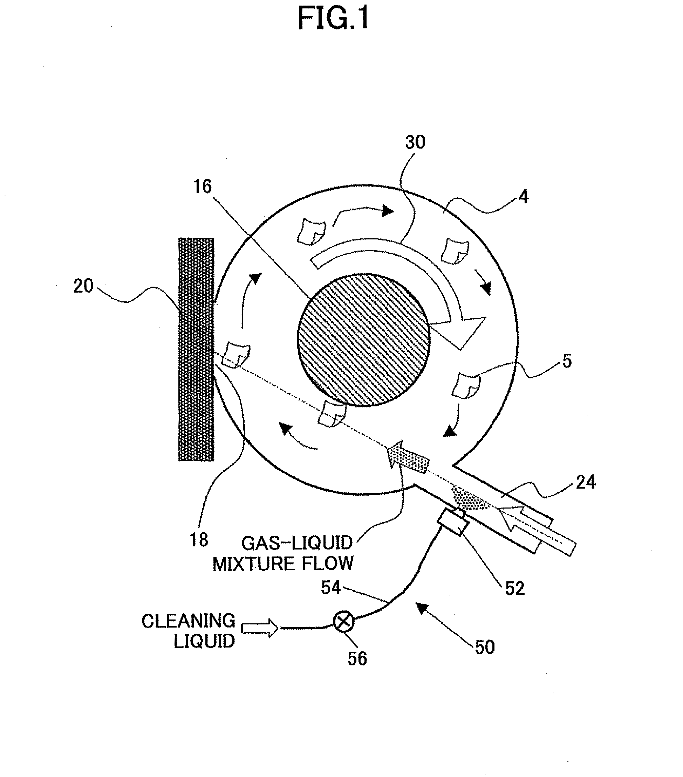

With reference to FIGS. 1 through 4, features (not shown in FIGS. 8 through 10) of a first embodiment of the present invention are described. Elements corresponding to those of the basic configuration described above are denoted by the same reference numerals, and are only described briefly (the same applies to the other embodiments).

As shown in FIG. 1, the case 4 that is a dry type cleaning case according to the present embodiment includes a spraying unit 50 acting as a humidifying unit for spraying water or a cleaning liquid as mist inside the inlet 24 acting as the ventilation path to prevent friction charge (to prevent the cleaning medium 5 from being charged due to friction).

The spraying unit 50 includes a spraying nozzle 52 fixed to the side surface of the inlet 24, a cleaning liquid tank and a pump (not shown), a liquid supply tube 54 connecting the pump and the spraying nozzle 52, and a valve 56 disposed in the middle of the liquid supply tube 54.

When the opening 18 is blocked by the cleaning object 20, the revolving airflow 30 is generated by the above mechanism, and the cleaning medium 5 flies and collides with the cleaning object 20.

As the pressure inside the case 4 becomes negative, the operator opens the valve 56 and the cleaning liquid of the spraying nozzle 52 is sprayed inside the inlet 24 as mist. The sprayed mist merges with the revolving airflow 30 by an airflow flowing from the inlet 24 so that a gas-liquid mixture flow is formed, which spreads in the case 4.

The spread mist adheres to the cleaning medium 5, or moisturizes the cleaning medium 5, so that the cleaning medium 5 is prevented from being charged due to friction.

As the cleaning medium 5 is prevented from being charged, the cleaning medium 5 is less likely to adhere to the separating plate 14 and the inner walls of the case 4, so that the cleaning medium 5 can circulate without disruption. Accordingly, the negative pressure is prevented from decreasing due to the cleaning medium 5 adhering to the separating plate 14.

Furthermore, the amount of the cleaning medium 5 that is put in the case 4 and that is flying by the revolving airflow 30 does not decrease. Therefore, the appropriate amount of the flying cleaning medium 5 for removing dirt (dust) from the cleaning object is maintained at a fixed amount, so that a high cleaning capability is maintained.

In this example, the cleaning liquid is sprayed by the pressure of a pump (not shown). However, the cleaning liquid may be turned into mist by the negative pressure of a high-speed airflow flowing in the inlet 24.

The spraying from the spraying nozzle 52 may be controlled by a switch, etc.

As described above, according to the first embodiment of the present invention, a moisturizing unit is provided for preventing the cleaning medium 5 from being charged due to friction. The material of the cleaning medium 5 may be resin, paper, cloth, felt, rubber, a sponge, and sawdust of wood and bamboo, depending on the dirt to be removed and the cleaning object.

Paper and cloth have moisture absorbent properties, which is appropriate for use in a lowmoisture environment where the above-described problem of friction charge may arise.

Particularly, when removing microscopic grains and oil-based dirt, paper and cloth are appropriate, because they include multiple fibers and have multiple spaces for taking in the dirt. Furthermore, from the viewpoint of removing dirt, the cleaning medium 5 preferably includes a hydrophilic material or a moisture absorbent material that easily becomes moist by the cleaning liquid, so that the cleaning liquid is quickly absorbed. Examples of a hydrophilic material or a moisture absorbent material are cellulose fiber constituting paper, natural fiber such as cotton and wool, and chemical fiber such as rayon, acryl, and vinylon.

Furthermore, a non-woven fabric cloth is even more preferable because the fiber is unlikely to fall out even when it is repeatedly used as a cleaning medium that collides with other objects. Paper is a low-cost material, and the environmental load can be reduced by reusing used paper.

As described above, when microscopic droplets of a cleaning liquid are sprayed from the spraying nozzle 52 in a state where the case opening 18 is applied to the cleaning object 20 and the suction device 12 is operating, the air outside the case 4 flows through the ventilation path (inlet 24) so that a gas-liquid mixture flow flows into the case 4. The microscopic droplets of a cleaning liquid adhere to/penetrate the cleaning medium 5 so that the cleaning medium 5 becomes moist.

When the opening 18 of the case 4 is applied to the cleaning object 20 while the suction device 12 is operating, the cleaning medium 5 repeatedly collides with the cleaning object 20 by the revolving airflow 30 inside the case 4, as described above. A cleaning medium that is appropriately moist has a higher capability in suctioning dirt than a dry cleaning medium, and therefore microscopic grains and oil-based dirt can be efficiently removed.

By appropriately controlling the amount of supplied cleaning liquid, the dirt can be removed without wetting the cleaning object 20.

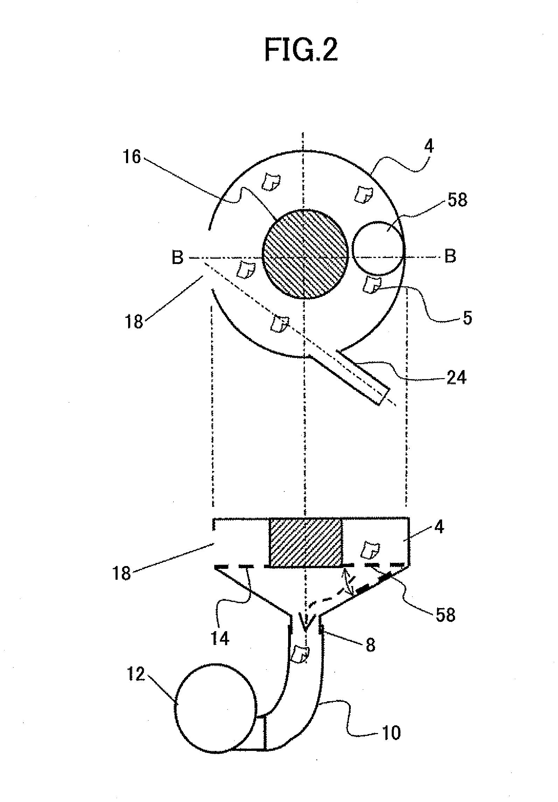

As shown in FIG. 2, a cleaning medium discharge outlet 58 that can open/close is provided on part of the separating plate 14. When the cleaning medium 5 becomes tainted after repeated usage, the cleaning medium discharge outlet 58 is opened with a handle mechanism (not shown), and the used cleaning medium 5 remaining in the case 4 is collected into the suction device 12.

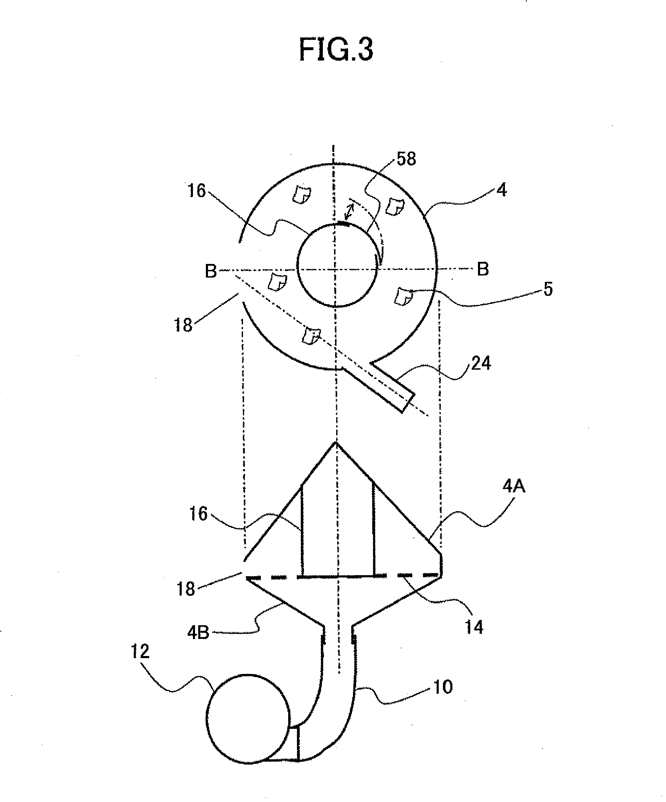

The cleaning medium discharge outlet 58 is closed during a regular cleaning operation. As shown in FIG. 3, the cleaning medium discharge outlet 58 may be provided on part of the side surface of the flow path restricting member 16 that is a cylindrical member. The flow path restricting member 16 in this example is a hollow cylinder. Furthermore, the upper case 4A may be shaped as a reverse cone with respect to the lower case 4B.

The cleaning medium discharge outlet 58 may be provided to slide in the circumferential direction, and to open/close in the outer radial direction by a hinge configuration (not shown) as indicated by a dashed-two dotted line.

A new cleaning medium 5 is supplied by bringing the opening 18 near the new cleaning medium 5 while the suction device 12 is operating, so that the new cleaning medium is supplied inside the case 4 by suction. In the dry type cleaning device 2, it is only possible to suction an amount of the cleaning medium 5 that can be suctioned by the separating plate 14, and therefore an appropriate amount of cleaning medium can be easily supplied.

When the cleaning medium is apt to clog the separating plate 14, microscopic protrusions may be formed on the separating plate 14 so that the cleaning medium can easily fly.

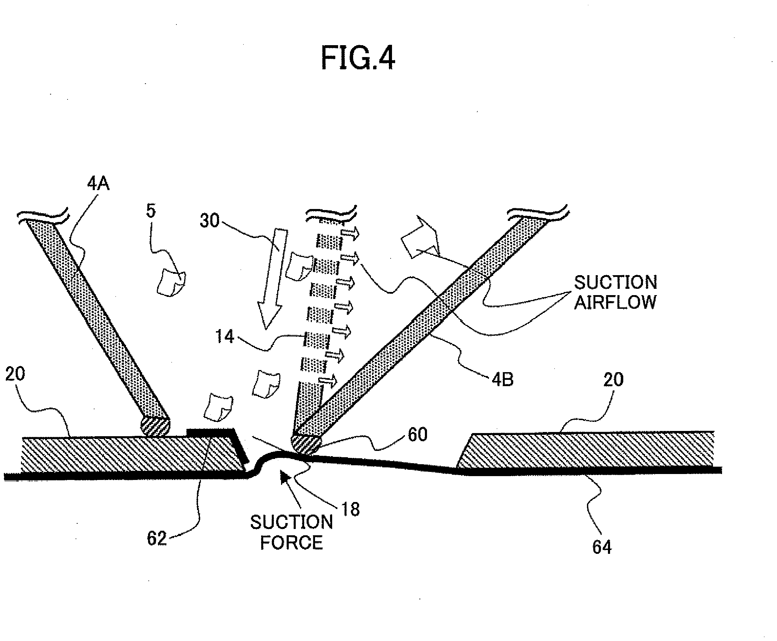

Around the opening 18, as shown in FIG. 4, a flexible member 60 such as rubber packing may be provided to enhance the efficiency in increasing the adhering properties between the opening 18 and the cleaning object 20.

In FIG. 4, a reference numeral 62 denotes dirt on the cleaning object 20, and a reference numeral 64 denotes a rubber sheet on which the cleaning object 20 is placed. Even if the cleaning object 20 has protrusions/recessions and an opening, by blocking the opening 18 with a soft rubber sheet 64, the negative pressure inside the case 4 can be increased so that the cleaning medium 5 is prevented from leaking outside during the cleaning operation.

### Experiment example of charge prevention

Table 1 indicates an experiment example of the charge prevention effect (expressed by variations in the charge potential) of the cleaning object by supplying a cleaning liquid (moisture). The material of the cleaning object was acrylic resin.

The suction flow rate of the suction unit was 1000 l/min and the amount of the supplied cleaning liquid (moisture) was 2 ml/min.

**Table 1**

| Material of cleaning medium | Paper | Resin film (polyimide) | Resin film (PET) |
|---|---|---|---|
| Moisture is not supplied | 7 kV through 8 kV | 3 kV through 4 kV | 3 kV through 4 kV |
| Moisture is supplied | Less than 1 kV | Less than 1 kV | Less than 1 kV |

By supplying moisture, the cleaning object was effectively prevented from being charged.

When moisture was not supplied, the cleaning medium in the form of thin flakes charged with static electricity adhered to the case and the cleaning object and did not move. Thus, the suction unit was blocked and the cleaning capability deteriorated. However, when moisture was supplied, such problems did not occur.

### Experiment example of cleaning capability

The cleaning object was a plastic product collected for recycling. SEM (Scanning Electron Microscope) was used to confirm the adhering matter. It was observed that particles of sub-micron sizes were adhering to the cleaning object. As the cleaning medium, paper rags cut into 1 cm² were used.

With the dry cleaning medium, the dirt in the form of microscopic particles was not completely removed. However, by spraying a slight amount of a cleaning liquid (moisture), the dirt was completely removed.

In this case, it is considered that by supplying the moisture in the form of mist, the friction charge of the cleaning medium can be prevented, and the adhering force between the microscopic particles by static electricity can be reduced.

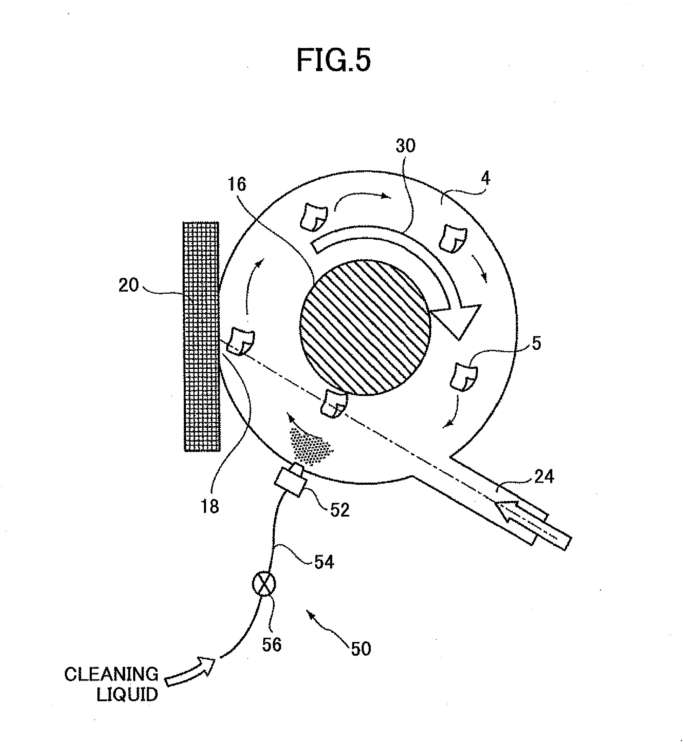

FIG. 5 indicates a second embodiment. Elements corresponding to the above embodiments are denoted by the same reference numerals, and are only described briefly without giving descriptions of configurations and functions that have already been described unless particularly necessary (the same applies to the other embodiments).

In the first embodiment, as shown in FIG. 1, the spraying nozzle 52 is provided on the side surface of the inlet 24, and the moisture is sprayed as mist into the ventilation path.

The point of an embodiment of the present invention is to prevent friction charge caused as the cleaning medium flies at high speed in this case. As long as the function of preventing friction charge is attained, the format of supplying moisture as mist is not limited.

From the above viewpoint, as shown in FIG. 5, the spraying nozzle 52 may be provided on the outer peripheral surface of the case 4 to spray the moisture into the case 4.

On the outer peripheral surface on the inside of the case 4, the flow speed of the passing airflow is as high as that in the ventilation path. Therefore, the sprayed cleaning liquid can quickly spread inside the case 4 and toward the cleaning medium 5.

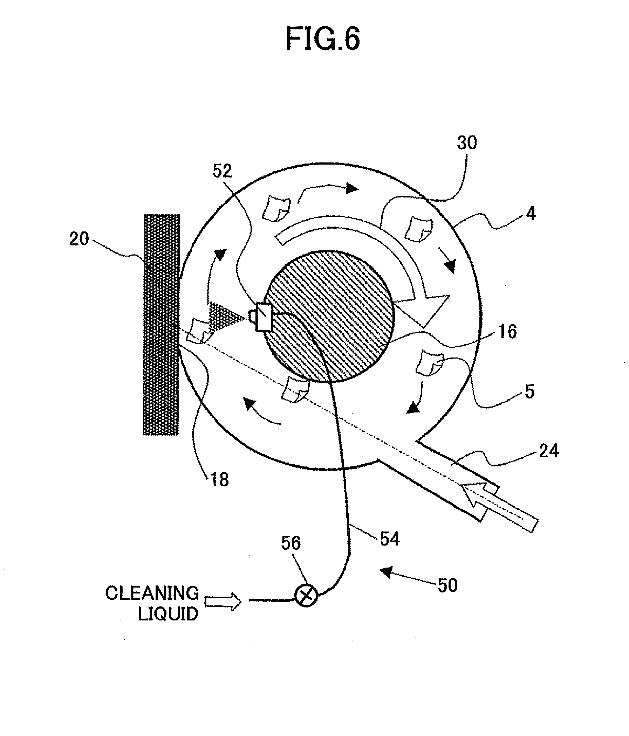

FIG. 6 indicates a third embodiment.

In the present embodiment, the spraying unit 50 is provided such that the cleaning liquid can be sprayed from the inner peripheral side of the revolving airflow 30 toward the opening 18.

As shown in FIG. 6, the spraying nozzle 52 is provided on the flow path restricting member 16 in a manner that the nozzle surface is facing the opening 18.

In the present embodiment, in a state where the opening 18 is applied to the cleaning object 20, the cleaning liquid is first directly sprayed toward the cleaning object 20, to decrease the adhering force of the dirt by the function of the cleaning liquid. Next, the cleaning medium 5 is caused to fly by suction so that the cleaning medium 5 contacts and removes the dirt.

While the cleaning medium 5 is flying, the sprayed cleaning liquid prevents friction charge as in the above embodiments.

In the present embodiment, the cleaning liquid can be sprayed at an amount by which the cleaning object 20 becomes wet. Thus, the cleaning medium 5 is preferably made of a material having moisture absorbent properties such as paper and cloth.

Alternatively, after removing the dirt with a material having high removing properties such as resin, the remaining cleaning liquid may be wiped off with a material having high moisture absorbent properties.

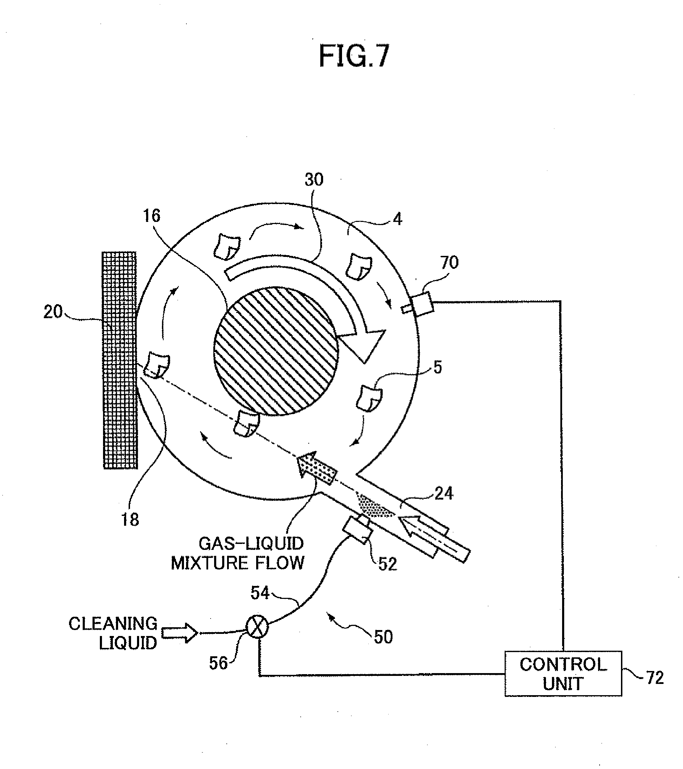

FIG. 7 indicates a fourth embodiment.

In the above embodiments, the operator operates the valve 56 to spray the cleaning liquid from the spraying nozzle 52. In the present embodiment, the moisturizing unit is controlled according to variations in the atmospheric pressure inside the case 4.

As shown in FIG. 7, the case 4 is provided with an atmospheric pressure sensor 70 acting as an atmospheric pressure detecting unit for detecting the atmospheric pressure inside the case 4 (more precisely, the area where the cleaning medium 5 flies). The atmospheric pressure sensor 70 converts the variations in the atmospheric pressure into electric current values and outputs the electric current values to a control unit 72.

The control unit 72 monitors the atmospheric pressure inside the case 4, and controls the opening/closing the valve 56 so that the cleaning liquid is sent out only when the pressure inside the case 4 becomes negative.

Alternatively, the control unit 72 may control the opening/closing the valve 56 so that the cleaning liquid is sent out only when the negative pressure inside the case 4 approaches a level at which the cleaning medium files at high speed (cleaning state).

By the above configuration, the cleaning liquid is prevented from being excessively supplied to the cleaning medium 5 and inside the case 4, so that only the friction charge prevention function is effectively implemented.

The appropriate amount of cleaning liquid to be supplied is approximately 0.5 ml/min through 5 ml/min, more preferably 1 ml/min through 3 ml/min, with respect to a flow rate 1000 l/min of the airflow that flows into the case 4 from the inlet 24 and suctioned to the suction unit 6 by the negative pressure generated by the suction unit 6. If the amount of supplied cleaning liquid is less than 0.5 ml/min, a sufficient moisturizing effect cannot be attained. Furthermore, if the cleaning liquid is excessively supplied, the cleaning medium 5 may adhere to each other or to other elements due to a liquid bridging force. In this case, the movement of the cleaning medium 5 is disadvantageously hampered.

As described above, the amount of the supplied cleaning liquid is very small, and therefore the opening/closing of the valve 56 is preferably controlled automatically as in the present embodiment, in order to maintain an appropriate amount of sprayed cleaning liquid.

In the present embodiment, an example of automatic control is illustrated based on the configuration of FIG. 1. However, the same automatic control is also applicable to FIGS. 5 and 6.

As described above, a small amount of cleaning liquid is supplied for preventing friction charge, and therefore the cleaning object and the cleaning medium hardly becomes wet. Therefore, even though a cleaning liquid is used, the cleaning format is a "dry type".

The cleaning liquid may be only water, or water in which a small amount of a surface active agent is added, or an electrolytic cleaning liquid that is formed by performing an electrolysis process on water. The type of cleaning liquid may be appropriately selected according to features of the dirt and the cleaning object.

When the cleaning object requires high quality cleaning, a cleaning case and a rinsing/drying case may be provided separately. In the rinsing/drying case, water is preferably used as the cleaning liquid.

By using nonwoven cloth as the cleaning medium to clean elements to which oil has adhered, it was possible to completely remove the dirt in the form of an oil film, which could not be completely removed with a dry cleaning medium.

The cleaning liquid may be supplied by dripping or wiping, instead of spraying.

According to one embodiment of the present invention, a dry type cleaning device is provided, in which the pressure inside the case is made negative by suction and a revolving airflow is formed to cause a cleaning medium to fly. This dry type cleaning device can prevent friction charge of the cleaning medium that leads to a decrease in cleaning capabilities, and can maintain fixed cleaning capabilities even in a low-humidity environment.

The present invention is not limited to the specific embodiments described herein, and variations and modifications may be made without departing from the scope of the present invention.

The present application is based on Japanese Priority Patent Application No. 2011-040588, filed on February 25, 2011 and Japanese Priority Patent Application No. 2011-226069 filed on October 13, 2011, the entire contents of which are hereby incorporated herein by reference.

## Claims

1. A dry type cleaning case for cleaning a cleaning object by causing a cleaning medium to fly by an airflow and contact the cleaning object, the dry type cleaning case comprising:
an internal space in which the cleaning medium is caused to fly;
an opening that comes in contact with the cleaning object so that the cleaning medium collides with the cleaning object;
a ventilation path through which air from outside is passed to the internal space;
a suction opening configured to generate a revolving airflow in the internal space by suctioning the air that is guided into the internal space through the ventilation path;
a porous unit configured to pass removed matter that is removed from the cleaning object to a side of the suction opening; and
a humidifying unit configured to increase humidity in an area where the cleaning medium flies.

2. The dry type cleaning case according to claim 1, wherein
the humidifying unit sprays moisture from an outer peripheral side of the revolving airflow.

3. The dry type cleaning case according to claim 2, wherein
the humidifying unit sprays the moisture in the ventilation path.

4. The dry type cleaning case according to claim 1, wherein
the humidifying unit sprays the moisture from an inner peripheral side of the revolving airflow.

5. The dry type cleaning case according to claim 4, wherein
the humidifying unit sprays the moisture toward the opening.

6. The dry type cleaning case according to any one of claims 1 through 4, further comprising:
a cleaning medium discharge outlet through which the cleaning medium is discharged from the area where the cleaning medium flies, wherein the cleaning medium discharge outlet can be opened and closed.

7. The dry type cleaning case according to claim 6, wherein
the cleaning medium discharge outlet is provided in the porous unit.

8. The dry type cleaning case according to claim 6, further comprising:
a flow path restriction member having a cylindrical shape extending in an axial center direction of the revolving airflow, wherein
the cleaning medium discharge outlet is provided on the flow path restriction member.

9. A dry type cleaning device comprising:
the dry type cleaning case according to any one of claims 1 through 8;
a suction unit connected to the suction opening; and
the cleaning medium.

10. The dry type cleaning device according to claim 9, further comprising:
a control unit configured to control the humidifying unit according to variations in atmospheric pressure inside the dry type cleaning case.
